Europäisches Patentamt

European Patent Office

Office européen des brevets

(11) Veröffentlichungsnummer: **0 216 110**
**A1**

## (12) EUROPÄISCHE PATENTANMELDUNG

(21) Anmeldenummer: 86111208.4

(22) Anmeldetag: 13.08.86

(51) Int. Cl.⁴: **B60S 1/34**

(30) Priorität: 23.08.85 DE 3530108

(43) Veröffentlichungstag der Anmeldung:
01.04.87 Patentblatt 87/14

(84) Benannte Vertragsstaaten:
FR GB IT

(71) Anmelder: SWF Auto-Electric GmbH
Stuttgarter Str. 119
D-7120 Bietigheim-Bissingen(DE)

(72) Erfinder: Bauer, Kurt
Wolfsgrubenstrasse 21
D-7121 Ingersheim 2(DE)
Erfinder: Dörr, Wilhelm
Paul-Bühler-Strasse 7
D-7120 Bietigheim-Bissingen(DE)

(54) Wischarm, insbesondere für Kraftfahrzeug-Scheibenwischeranlagen.

(57) Die Erfindung betrifft einen Wischarm mit einem Befestigungsteil und einem um eine Achse - schwenkbar gelagerten Gelenkteil, an welchem ein Wischblatt befestigt werden kann. Das Gelenkteil nimmt ein Federelement auf, das mit einem ersten Ende am Gelenkteil und mit einem zweiten Ende an einem Bügel angelenkt ist. Der Wischarm besitzt eine Vorrichtung, welche während der Bewegung des Gelenkteils vor der Betriebsstellung in eine Abklappstellung eine Bewegung des Anlenkpunktes des Federelementes am Bügel zurückhält. Dadurch wird vermieden, daß der Bügel am Befestigungsteil anschlägt, bevor das Gelenkteil eine stabile Abklappstellung erreicht hat.

Fig. 1

EP 0 216 110 A1

## Wischarm, insbesondere für Kraftfahrzeug-Scheibenwischeranlagen

Die Erfindung betrifft einen Wischarm gemäß den Merkmalen des Oberbegriffs des Anspruchs 1.

Heuzutage werden Kraftfahrzeuge manchmal so konstruiert, daß ein Windschutzscheibenwischer in einem zwischen der Windschutzscheibe und der Motorhaube oder dem Kofferraumdeckel befindlichen schmalen Schlitz auf der Wischerwelle befestigt werden muß, weil der Scheibenwischer in der Parkstellung nicht sichtbar sein und eine sogenannte versenkte Parkstellung einnehmen soll.

Damit man das Wischblatt eines Scheibenwischers problemlos auswechseln kann, ist es erwünscht, daß das Gelenkteil, das meist über eine Wischstange ein Wischblatt hält, in eine stabile Stellung von der Scheibe abgeklappt werden kann, wo das vordere Ende des Wischarms möglichst weit von der Scheibe entfernt ist. Die stabile Abklappstellung kann man dadurch erhalten, daß man das Gelenkteil gegenüber dem Befestigungsteil mitsamt dem Federelement und dem Bügel so weit verschwenkt, daß die bekanntermaßen zwischen den beiden Anlenkpunkten des Federelements verlaufende Wirkungslinie des Federelements die Schwenkachse zwischen dem Gelenkteil und dem Befestigungsteil überquert, bis das Federelement den Totpunkt gegenüber der Schwenkachse überschritten hat und der Bügel am Befestigungsteil oder das Gelenkteil an der Oberseite des Befestigungsteils anschlägt. Ein solcher Wischarm ist beispielsweise aus der DE-PS 21 05 101 bekannt. Hier ist eine Zugfeder einerseits an einem vor der Schwenkachse zwischen Befestigungsteil und Gelenkteil liegenden Bereich an einer mit dem Gelenkteil vernieteten Wischstange und andererseits an einem weiter hinten, aber noch vor der Schwenkachse liegenden Bereich an einem etwa C-förmigen, nach unten gekrümmten Bügel eingehängt, welcher an einem am Befestigungsteil angeordneten Haltezapfen angelenkt ist. Dieser Anlenkpunkt ist derart hinter und unter der Schwenkachse zwischen Befestigungsteil und Gelenkteil angeordnet, daß in der Betriebsstellung des Gelenkteils die Wirkungslinie des Federelements in einem Abstand unterhalb der Schwenkachse liegt und das Federelement das Gelenkteil nach unten in Richtung der zu reinigenden Scheibe zieht. Die Anlenkpunkte des Federelements am Bügel und der Anlenkpunkt des Bügels am Befestigungsteil liegen dabei auf einer geraden Linie unterhalb der Schwenkachse. Das Gelenkteil kann durch Schwenken um die Schwenkachse nach oben in eine stabile Abklappstellung gebracht werden, in der das Gelenkteil mit einem abgebogenen Fortsatz an der Oberseite des Befestigungsteils anliegt. Der Abklappwinkel beträgt hier etwa 45 Grad. Die Anlenkpunkte des Federelements und der Anlenkpunkt des Bügels am Befestigungsteil liegen dabei auf einer geraden Linie jenseits des Totpunkts des Federelements gegenüber der Schwenkachse. Diese stabile Abklappstellung kann hier nur erreicht werden, weil der Bügel derart gekrümmt ist, daß er nicht an der Schwenkachse anschlägt, bevor die Wirkungslinie des Federelements den Totpunkt gegenüber der Schwenkachse überschritten hat. Bei einem vorzeitigen Anschlagen des Bügels würde das Gelenkteil wieder in Richtung der Scheibe zurückschlagen, wenn man das Gelenkteil z.B. beim Wischblattwechsel losläßt, wodurch die Scheibe beschädigt werden kann. Wegen der relativ großen Krümmung des Bügels ist aber die Bauhöhe des Wischarms so groß, daß er nicht in allen Fällen für Scheibenwischeranlagen mit versenkter Parkstellung Anwendung finden kann. Theoretisch könnte man einen weniger stark gekrümmten Bügel verwenden und dadurch die Bauhöhe des Wischarms verkleinern, in dem man den Anlenkpunkt des Bügels am Befestigungsteil weiter nach vorne verlagert. Dann ist aber ein sehr großer Abklappwinkel nötig, wenn das Gelenkteil eine stabile Abklappstellung erreichen soll. Außerdem muß dann der vor der Schwenkachse liegende Bereich des Wischarms sehr lang gestaltet werden, wenn der bisher verwendete Bügel und das bisher verwendete Federelement weiter verwendet werden sollen.

Aufgabe der Erfindung ist es, einen Wischarm der eingangs erwähnten Art, bei dem die Längenmaße und der Abklappwinkel weitgehend vorgeschrieben sind, zu schaffen, der niedrig baut. Weiterhin sollte der Wischarm gefällig aussehen und eine lange Gebrauchsdauer erwarten lassen.

Diese Aufgabe wird von einem Wischarm gelöst, welcher das im kennzeichnenden Teil des Anspruchs 1 aufgeführte Merkmal aufweist. Durch dieses Zurückhalten des Anlenkpunktes kann vermieden werden, daß der Bügel am Befestigungsteil bzw. an der Schwenkachse anschlägt, bevor das Gelenkteil eine stabile Abklappstellung erreicht hat. Der Bügel kann nun ohne Probleme zu verursachen flach gestaltet werden, wodurch die Bauhöhe des gesamten Wischarms klein gehalten werden kann.

Damit bei einer solchen Ausführung eine stabile Abklappstellung erreicht wird, sollte eine Verlagerung des Anlenkpunktes des Federelementes am Bügel gemäß Anspruch 2 möglich sein.

Als Ort für das Einwirken der Vorrichtung wird dabei der Bereich des Anlenkpunktes von Federelement und Bügel vorgeschlagen. Bekanntermaßen kann man den Bügel als Hebel betrachten, der einen gedachten Drehpunkt an der Anlenkstelle am Befestigungsteil besitzt. Demgemäß ist im Bereich des Anlenkpunktes von Federelement und Bügel nur ein geringer Kraftaufwand zum Zurückhalten des Anlenkpunktes nötig, weil dieser Punkt weit entfernt vom Drehpunkt liegt. Außerdem ist dieser Wischarmbereich zum Anbringen der Vorrichtung günstig, weil der Anlenkpunkt des Federelementes am Bügel tiefer als der Anlenkpunkt des Federelementes am Gelenkteil im hohlen Gelenkteil liegen muß, wenn das Federelement einen genügend großen Anpreßdruck ausüben können soll, so daß zwischen dem Anlenkpunkt des Federelementes am Bügel und der darüberliegenden Gelenkteilwand relativ viel freier Raum vorhanden ist. Es ist aber auch möglich, die Vorrichtung am anderen Ende des Bügels oder in einem dazwischen liegenden Bereich vorzusehen.

Weiterhin besteht die Möglichkeit, die Vorrichtung gemäß Anspruch 4 zwischen den Anlenkpunkten des Federelementes vorzusehen. Hier kommen auch solche Lösungen in Frage, bei denen die Federrichtung, beispielsweise durch einen sich zwischen den Federanlenkpunkten erstreckenden Dorn, konstant gehalten wird.

Bei einer Weiterbildung gemäß Anspruch 3 oder 4 kommen theoretisch auch Vorrichtungen in Betracht, die aus einem zwischen dem Bügel und der darüberliegenden Gelenkteilwand oder an einem zwischen das Federelement und der darüberliegenden Gelenkteilwand eingeklemmten Körper bestehen. Die Erreichung und Beibehaltung der exakten Lage eines solchen Körpers dürfte in der Praxis aber Schwierigkeiten bereiten, weswegen man anderen Ausgestaltungen den Vorzug geben wird.

Theoretisch könnte man auch das Federelement mit einem oder mehreren Vorsprüngen ausstatten, die während der Bewegung des Gelenkteils in die Abklappstellung mit einer oder mehreren Gelenkteilwandbereichen zusammen wirken. Solche Federelemente sind aber nicht handelsüblich. Man bevorzugt aus Preisgründen die Verwendung handelsüblicher Federelemente und verwendet lieber ein speziell gestaltetes Bügelelement.

Weiterhin könnte man auch das Gelenkteil an den Seitenwänden mit Vorsprüngen oder herausgescherten Lappen ausstatten, die während der Abklappbewegung am Bügel und/oder am Federelement zur Anlage kommen.

Besondere Vorteile hinsichtlich einer einfachen Montage und hinsichtlich der Kostengünstigkeit ergeben sich bei einer Weiterbildung gemäß Anspruch 6. Dabei kann das Gelenkteil wie bisher üblich gestaltet bleiben, es kann aber auch gemäß einem der Ansprüche 7 bis 9 weitergebildet sein. Das Zurückhalten des Anlenkpunktes des Federelementes am Bügel kann aber auch allein durch ein gemäß einem der Ansprüche 7 bis 9 gestaltetes Gelenkteil bewerkstelligt werden, das mit einem herkömmlichen Federelement und/oder Bügel zusammenwirkt.

Um Beschädigungen der meistens lackierten Gelenkteiloberfläche und/oder Bügeloberfläche zu vermeiden, wenn die beiden Bauteile bei der Bewegung des Gelenkteils in die Abklappstellung aneinander zur Anlage kommen und sich aneinander entlangbewegen und sich bei der Zurückbewegung wieder aneinander entlang und voneinander wegbewegen, wird eine Ausgestaltung des Wischarms gemäß Anspruch 10 vorgeschlagen. Als Mittel mit guten Gleiteigenschaften kommt dabei insbesondere eine auf dem Bügelende befestigte Kunststoffkappe in Betracht.

Wenn der Bügel dabei gemäß Anspruch 11 ausgestaltet ist, kann der Wischarm im Befestigungsteilbereich schmal gestaltet werden. Zur Verwirklichung der Erfindung können aber auch in Ansicht von oben etwa U-förmige Bügel Anwendung finden, welche das Befestigungsteil mit ihren U-Schenkeln seitlich umgreifen.

Weitere vorteilhafte Einzelheiten und Ausgestaltungen der Erfindung sind aus der nachfolgend erläuterten Zeichnung ersichtlich. Dabei zeigt

Fig. 1 einen Längsschnitt durch einen ersten Wischarm sowohl in der Betriebsstellung B als auch in der Abklappstellung A,

Fig. 2 eine Einzelheit aus Fig. 1 in vergrößerter Darstellung und

Fig. 3 einen Längsschnitt durch einen zweiten Wischarm sowohl in der Betriebsstellung B als auch in der Abklappstellung A.

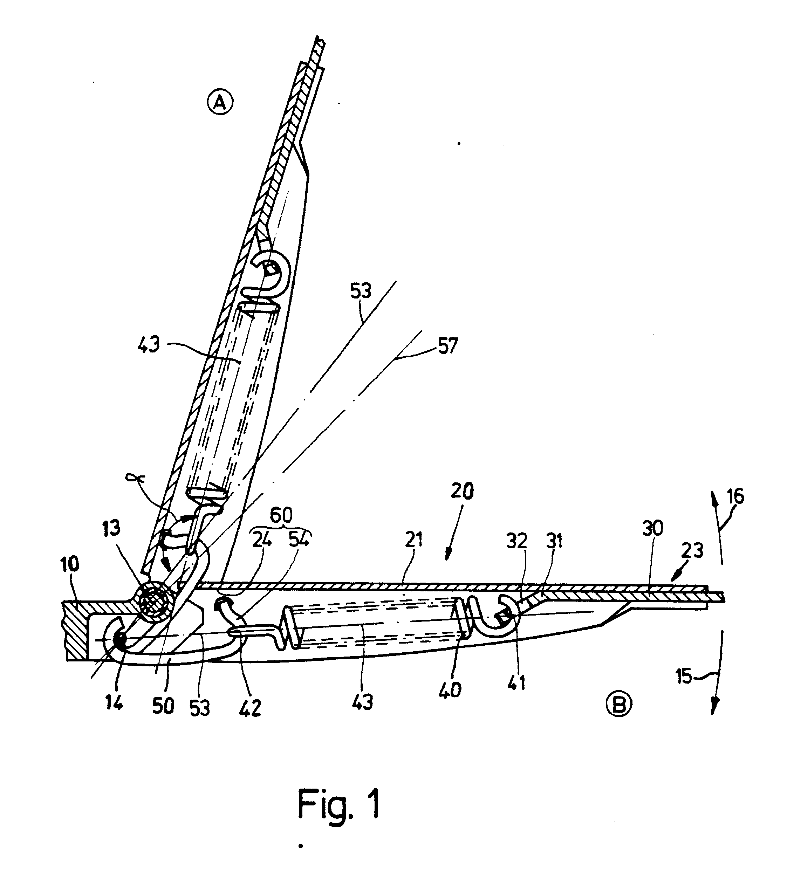

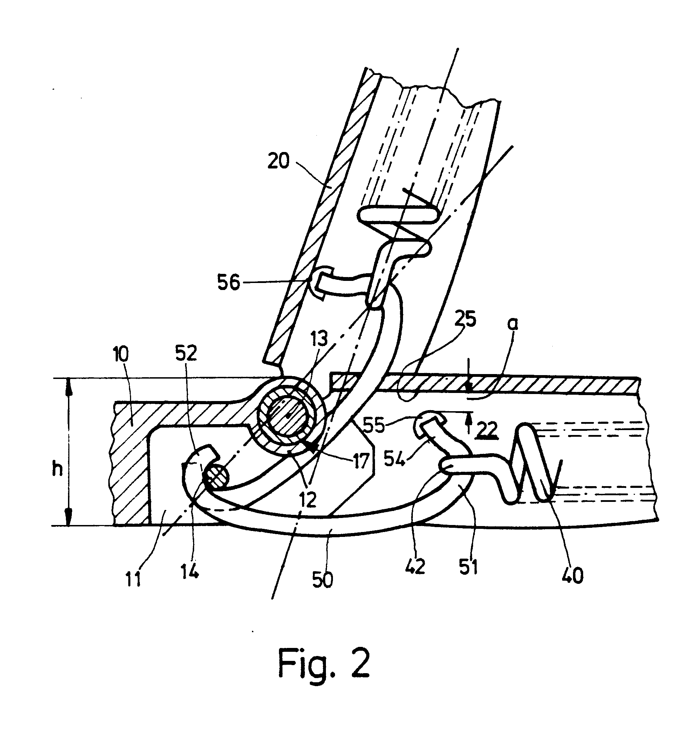

Der in den Fig. 1 und 2 dargestellte Wischarm besitzt ein Befestigungsteil 10 zur drehfesten Verbindung mit einer nicht dargestellten Wischerwelle. Das Befestigungsteil 10 besitzt zwei sich nach vorne in Wischarmlängsrichtung erstreckende Seitenwände, von denen die eine, mit dem Bezugszeichen 11 versehene, dargestellt ist. Die Seitenwände 11 sind nahe ihrem vorderen Ende durch eine sich quer zur Wischarmlängsrichtung erstreckende buchsenartige Aufnahme 12 miteinander verbunden. In dieser Aufnahme 12 ist ein Gelenkniet 13 gelagert, über den das Gelenkteil 20 des Wischarms schwenkbar am Befestigungsteil 10 angelenkt ist. Im nachfolgenden wird deshalb der Gelenkniet 13 als Schwenkachse 13 bezeichnet.

Das Gelenkteil 20 ist im Querschnitt etwa U-förmig gestaltet und weist einen Rücken 21 sowie zwei Seitenwangen auf, von denen die eine, mit dem Bezugszeichen 22 versehen, dargestellt ist. Die Seitenwangen 22 übergreifen das Befestigungsteil 10 teilweise und sind drehbar auf der Schwenkachse 13 gelagert. Mit seinem vorderen, dem Befestigungsteil 10 fernen Ende 23 umgreift das Gelenkteil 20 formschlüssig eine im Querschnitt etwa rechteckige Wischstange 30, an deren nicht dargestelltem vorderen Ende ein Wischblatt befestigbar ist.

Die Wischstange 30 ragt mit einem nach unten abgewinkelten Ende 31 ins Innere des Gelenkteils 20. In das Ende 31 ist ein Durchbruch 32 eingelassen, in welchem eine Zugfeder 40 mit ihrem vorderen Ende bei 41 angelenkt ist. Die Feder 40 verläuft im Inneren des Gelenkteils 20 und ist mit ihrem hinteren Ende bei 42 an einen in Wischarmlängsrichtung verlaufenden, leicht nach unten gekrümmten, etwa C-förmigen Bügel 50 an dessen vorderem Ende 51 angelenkt. Der C-Bügel 50 ist mit seinem hinteren Ende 52 bei 14 an einem sich quer zur Wischarmlängsrichtung erstreckenden Haltezapfen angelenkt, der einstückig mit den Seitenwänden 11 des Befestigungsteils 10 gefertigt und hinter und unterhalb der Schwenkachse 13 angeordnet ist. Das vordere Ende 51 des Bügels 50 ist vor der Schwenkachse 13 angeordnet. Die zwischen dem Anlenkpunkt 41 der Zugfeder 40 am Gelenkteil 20 und dem Anlenkpunkt 42 der Zugfeder 40 am Bügel 50 gedachte, mit der Federwirkungslinie identische Verbindungslinie 43 und die zwischen dem Anlenkpunkt 42 der Zugfeder 40 am Bügel 50 und dem Anlenkpunkt 14 des Bügels 50 am Befestigungsteil 10 gedachte, mit der Bügelwirkungslinie identische Verbindungslinie 53 bilden in der Betriebsstellung B eine auf Abstand unterhalb der Schwenkachse 13 zwischen Befestigungsteil 10 und Gelenkteil 20 liegende Gerade. Dadurch wird das Gelenkteil 20 und damit das mit ihm verbundene Wischblatt in der Betriebsstellung B in einer Drehrichtung, welche durch den Pfeil 15 angedeutet ist, gegen die nicht dargestellte, zu reinigende Scheibe vorgespannt.

Der Wischarm besitzt an seinem höchsten, durch die Aufnahme 12 für die Schwenkachse 13 und den Bügel 50 gebildeten Bereich lediglich eine Bauhöhe h von etwa 22 mm. Der Wischarm ist deswegen hervorragend zur Verwendung in Kraftfahrzeug-Scheibenwischeranlagen mit versenkter Parkstellung geeignet, bei welchen der Wischarm in einem zwischen der Windschutzscheibe und der Motorhaube oder dem Kofferraumdeckel befindlichen schmalen Schlitz auf der Wischerwelle befestigt werden muß. Trotz der niedrigen Bauhöhe h des Wischarms im Bereich des Bügels 50 kann das Gelenkteil 20 mitsamt der Wischstange 30 und dem Wischblatt beispielsweise zum Wischblattwechsel von der Betriebsstellung B in eine stabile Abklappstellung A, wo also das Gelenkteil 20 nicht durch die Wirkung der Zugfeder 40 ungewollt in die Betriebsstellung B zurückgezogen und die Wischstange 30 auf die Scheibe aufschlagen und diese beschädigen kann, gebracht werden.

Das wird durch eine Vorrichtung 60 erreicht, welche während der Bewegung des Gelenkteils 20 um die Schwenkachse 13 in der durch den Pfeil 16 angedeuteten Drehrichtung von der Betriebsstellung B in die Abklappstellung A eine Bewegung des Anlenkpunktes 42 der Zugfeder 40 am Bügel 50 in Richtung der Schwenkachse 13 zurückhält. Dadurch wird vermieden, daß der Bügel 50 an der Aufnahme 12 für die Schwenkachse 13 anschlägt, bevor das Gelenkteil 20 seine stabile Abklappstellung A erreicht hat. Die Vorrichtung 60 setzt sich dabei aus einem einstückig am vorderen Ende 51 des Bügels 50 angeformten, sich in Richtung des Gelenkteilrückens 21 erstreckenden Ansatz 54 und dem etwa darüberliegenden Bereich 24 des Gelenkteilrückens 21 zusammen. Auf den Ansatz 54 ist eine oberflächenglatte, aus einem Kunststoff mit guten Gleiteigenschaften gefertigte Kappe 55 unverlierbar aufgerastet. Der Bügel 50 besitzt somit im Bereich des Anlenkpunktes 42 des Federelementes 40 am Bügel 50 einen relativ geringen Abstand a zum Gelenkteilrücken 21 und kommt deshalb bald nach dem Beginn der Bewegung des Gelenkteils 20 in einer Drehrichtung, welche durch den Pfeil 16 angedeutet ist und zur die Abklappstellung A führt an der Innenfläche 25 des Gelenkteilrückenbereichs 24 mit der Außenfläche 56 der Kappe 55 zur Anlage. Der Bügel 50 dreht sich deshalb langsamer um den Anlenkpunkt 14 als das Gelenkteil 20 um die Schwenkachse 13, so daß die Verlagerung des Anlenkpunktes 42 der Zugfeder 40 am Bügel 50 gegenüber der Verlagerung des Gelenkteils 20 und damit des Anlenkpunktes 41 der Zugfeder 40 am Gelenkteil 20 während der Abklappbewegung zurückgehalten wird. In der Abklappstellung A schließen dadurch die zwischen dem Anlenkpunkt 14 des Bügels 50 am Befestigungsteil 10 und dem Anlenkpunkt 42 der Zugfeder 40 am Bügel 50 gedachte Verbindungslinie 53 und die zwischen dem Anlenkpunkt 42 der Zugfeder 40 am Bügel 50 und dem Anlenkpunkt 41 der Zugfeder 40 am Gelenkteil 20 gedachte Verbindungslinie 43 einen Winkel α von etwa 160° ein, welcher sich zum Gelenkteilrücken 21 öffnet. Diese Abklappstellung A ist stabil, weil die Verbindungslinie 53 und damit die Wirkungslinie des Bügels 50 jenseits der mit 57 angedeuteten Totpunktlinie des Bügels 50 gegenüber der Schwenkachse 13 liegt und der Bügel 50 an der äußeren Mantelfläche 17 der Schwenkachsenaufnahme 12 anliegt.( Die Aufnahme 12 ist im Anlagebereich mit einem kleineren Durchmesser als in den übrigen Bereichen gestaltet, wie Fig. 2 zeigt.) Die Anlage des Bügels 50 an der Schwenkachsenaufnahme 12 ist möglich, weil die Krümmung des Bügels 50 gegenüber der Verbindungslinie 53 auf die Krümmung der äußeren Mantelfläche 17 der Schwenkachsenaufnahme 12 abgestimmt ist.

Die Kunststoffkappe 55 verhindert, daß die Innenfläche 25 des Gelenkteilsrückens 21 während der Bewegung des Gelenkteils 20 in die Abklappstellung A, während welcher der Bügelfortsatz 54 entlang der Innenfläche 25 des Gelenkteilsrückens 21 gleitet, durch den Bügelfortsatz 54 zerkratzt werden kann.

Zu erwähnen ist noch, daß der Abklappwinkel, d.h. der Winkel, den das Gelenkteil 20 in der Abklappstellung A gegenüber der Betriebsstellung B einnimmt, etwa 70° beträgt. Er ist somit genügend groß, um einen Wischblattwechsel bequem von Hand vornehmen zu können.

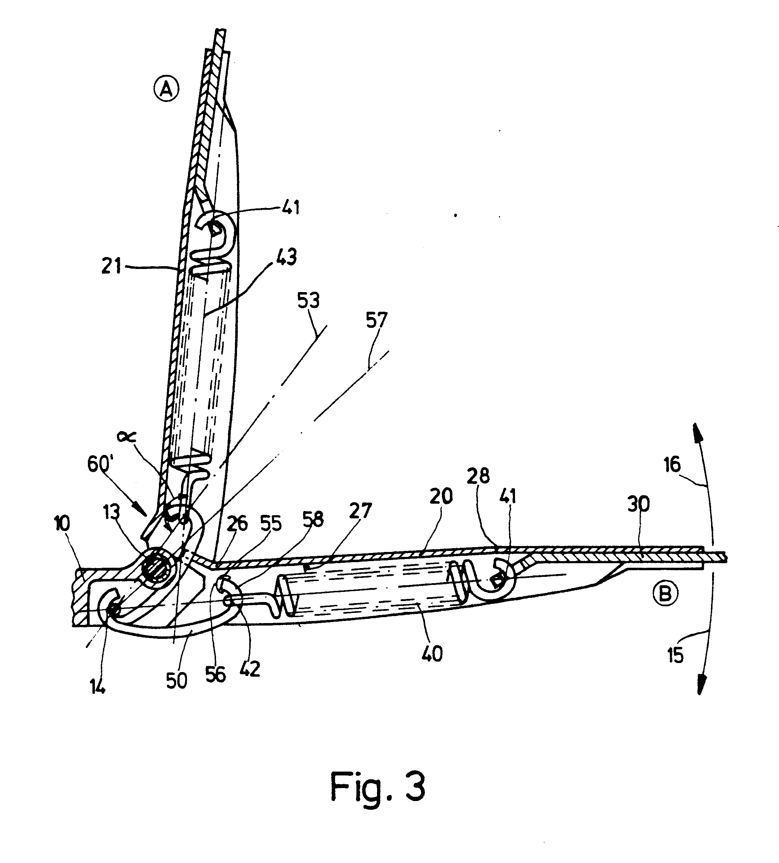

Der in Fig. 3 dargestellte Wischarm ist bis auf die das Zurückhalten des Anlenkpunktes 42 des Federelementes 40 am Bügel 50 bewirkende Vorrichtung gleich wie der zuvor dargestellte und beschriebene erste Wischarm aufgebaut.

Die gleich wie beim ersten Wischarm aufgebauten Teile sind mit den gleichen Bezugszeichen bezeichnet wie beim ersten Wischarm. Bezüglich der Beschreibung wird auf obigen Text verwiesen.

Nachstehend wird die abweichend aufgebaute, jedoch gleich wie die Vorrichtung 60 wirkende Vorrichtung 60' beschrieben.

Die Vorrichtung 60' setzt sich aus einem in den Gelenkteilrücken 21 eingelassenen, ins Gelenkteilinnere ragenden Knick 26 zusammen, der mit dem zur Schwenkachse 13 hin gekrümmten vorderen Ende 58 des in Wischarmlängsrichtung etwa C-förmigen Bügels 50 zusammenwirkt. Der Knick 26 beginnt bereits relativ weit vorne im Gelenkteilrücken 21 etwa oberhalb des Anlenkpunktes 41 der Zugfeder 40 am Gelenkteil 20 an einem mit 28 gekennzeichneten Bereich. Dadurch ist der Übergang vom normalen zum geknickten Bereich sanft und bereitet keine fertigungstechnischen Schwierigkeiten. Das vordere Ende 58 des Bügels 50 ist mit einer Kunststoffkappe 55 mit guten Gleiteigenschaften verkleidet. Während der Bewegung des Gelenkteils 20 von der Betriebsstellung B in die Abklappstellung A kommt der Bügel 50 mit der Außenfläche 56 der Kappe 55 alsbald an der Innenfläche 27 des Knicks 26 zur Anlage. Somit wird auch hier während der Bewegung des Gelenkteils 20 um die Schwenkachse 13 in die durch den Pfeil 16 angedeutete Drehrichtung von der Betriebsstellung B in die Abklappstellung A eine Bewegung des Anlenkpunktes 42 der Zugfeder 40 am Bügel 50 in Richtung der Schwenkachse 13 zurückgehalten.

## Ansprüche

1. Wischarm, insbesondere für Kraftfahrzeug-Scheibenwischeranlagen, mit einem Befestigungsteil und einem um eine Achse schwenkbar daran gelagerten Gelenkteil, welches eine Betriebsstellung und eine stabile Abklappstellung einnehmen kann und welches wenigstens ein Federelement aufnimmt, das mit einem ersten Ende von der Schwenkachse zwischen Befestigungsteil und Gelenkteil und mit einem zweiten Ende an einem Bügel angelenkt ist, welcher am Befestigungsteil angelenkt ist, wobei in der Betriebsstellung des Gelenkteils die Anlenkpunkte des Federelements und der Anlenkpunkt des Bügels diesseits der Schwenkachse zwischen Befestigungsteil und Gelenkteil liegen und wobei das Gelenkteil durch die Kraft des Federelements in einer Drehrichtung gegen die zu reinigende Scheibe vorgespannt ist, dadurch gekennzeichnet, daß wenigstens eine Vorrichtung (60,60') vorhanden ist, welche während der Bewegung des Gelenkteils (20) in die Abklappstellung (A) eine Bewegung des Anlenkpunktes (42) des Federelementes (40) am Bügel (50) in Richtung der Schwenkachse (13) zwischen Befestigungsteil (10) und Gelenkteil (20) derart zurückhält, daß die gedachte Verbindungslinie (53) zwischen dem Anlenkpunkt (42) des Federelements (40) am Bügel (50) und dem Anlenkpunkt (14) des Bügels (50) am Befestigungsteil (10) mit der gedachten Verbindungslinie (43) zwischen dem Anlenkpunkt (42) des Federelements (40) am Bügel (50) und dem Anlenkpunkt (41) des Federelements (40) am Gelenkteil (20) während der Bewegung in die Abklappstellung (A) und in der Abklappstellung (A) einen von 180° abweichenden Winkel (α) einschließt, welcher sich zu einer wenigstens annähernd parallel zur Schwenkachse (13) zwischen Befestigungsteil (10) und Gelenkteil (20) und oberhalb des Bügels (50) und des Federelements (40) liegenden Wand (21) des Wischarms öffnet.

2. Wischarm nach Anspruch 1, wobei das Federelement mit seinem zweiten Ende vor der Schwenkachse zwischen Befestigungsteil und Gelenkteil an einem Bügel angelenkt ist, der hinter der Schwenkachse zwischen Befestigungsteil und Gelenkteil am Befestigungsteil angelenkt ist, dadurch gekennzeichnet, daß die Vorrichtung (60,60') eine Verlagerung des Anlenkpunkts (42) des Federelements (40) am Bügel (50) während der Bewegung des Gelenkteils (20) in die Abklappstellung (A) derart zuläßt, daß die gedachte Verbindungslinie (53) zwischen dem Anlenkpunkt (42) des Federelements (40) am Bügel (50) und dem Anlenkpunkt (14) des Bügels (50) am Befestigungsteil (10) in der Abklappstellung (A) jenseits der Schwenkachse (13) zwischen Befestigungsteil (10) und Gelenkteil (20) verläuft und daß der Bügel (50) an der Schwenkachse oder am Befestigungsteil (10,12) anliegt oder daß das Gelenkteil am Befestigungsteil anliegt.

3. Wischarm nach Anspruch 1 oder 2, dadurch gekennzeichnet, daß die Vorrichtung (60,60') im Bereich des Anlenkpunktes (42) des Federelementes (40) am Bügel (50) auf den Bügel (50) oder das Federelement einwirkt.

4. Wischarm nach Anspruch 1 oder 2, dadurch gekennzeichnet, daß die Vorrichtung zwischen dem Anlenkpunkt des Federelements am Gelenkteil und dem Anlenkpunkt des Federelements am Bügel angeordnet ist.

5. Wischarm nach Anspruch 3 oder 4, dadurch gekennzeichnet, daß die Vorrichtung (60,60') aus zwei zusammenwirkenden Elementen (24,54;26,58) besteht, von denen das eine (54;58) am Bügel (50) und das andere (24;26) am Gelenkteil (20) oder am Befestigungsteil angeordnet ist.

6. Wischarm nach Anspruch 3 oder 5, dadurch gekennzeichnet, daß das eine Element (54) als einstückig am vorderen Ende des Bügels (50) angeformter Ansatz ausgebildet ist und daß das andere Element (24) am Rücken (21) des Gelenkteils (20) angeordnet ist und daß die beiden Elemente (54;24) während der Bewegung des Gelenkteils (20) in die Abklappstellung (A) sowie in der Abklappstellung (A) mit ihren einander zugewandten Oberflächenbereichen (25,56) aneinander anliegen.

7. Wischarm nach wenigstens einem der vorhergehenden Ansprüche, dadurch gekennzeichnet, daß das Gelenkteil (20) wenigstens ein ins Gelenkteilinnere ragendes Element (26) aufweist, welches während der Bewegung des Gelenkteils (20) in die Abklappstellung (A) am Federelement oder am Bügel (50) anliegt.

8. Wischarm nach Anspruch 6 oder 7, dadurch gekennzeichnet, daß das Element (24,26) einstückig mit dem Gelenkteil (20) gefertigt ist.

9. Wischarm nach Anspruch 7 oder 8, dadurch gekennzeichnet, daß das Element (26) als Knick im Gelenkteilrücken (21) ausgebildet ist.

10. Wischarm nach einem der Ansprüche 6 bis 9, dadurch gekennzeichnet, daß zwischen dem Bügel (50) und dem Gelenkteil (20) im Anlagebereich (25,56;27,56) wenigstens ein Mittel (55) mit guten Gleiteigenschaften angeordnet ist.

11. Wischarm nach wenigstens einem der vorhergehenden Ansprüche, dadurch gekennzeichnet, daß der Bügel (50), in Wischarmlängsrichtung betrachtet, etwa die Gestalt eines flachen "C" besitzt.

12. Wischarm nach Anspruch 2 und 11, dadurch gekennzeichnet, daß die Krümmung des Bügels (50) auf die Krümmung der freien Mantelfläche (17) der Schwenkachse (13) abgestimmt ist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 847 695 (SAMPSON)<br>* Figur 3 *<br><br>--- | 1 | B 60 S 1/34 |
| D,A | DE-B-2 105 101 (SWF)<br>* ganzes Dokument *<br><br>----- | 1 | |

**RECHERCHIERTE SACHGEBIETE (Int. Cl.4)**

B 60 S 1/00

Der vorliegende Recherchenbericht wurde für alle Patentansprüche erstellt.

| Recherchenort | Abschlußdatum der Recherche | Prüfer |
|---|---|---|
| BERLIN | 27-11-1986 | STANDRING M A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82